# EUROPEAN PATENT SPECIFICATION

(11) **EP 3 206 512 B1**
(45) Date of publication and mention of the grant of the patent: **10.10.2018**
(21) Application number: 15797428.8
(22) Date of filing: 16.10.2015
(51) Int. Cl.: A24C 5/39, B65G 53/60

(54) **MACHINE FOR PRODUCING SUBSTANTIALLY CYLINDRICAL ARTICLES IN THE TOBACCO PROCESSING INDUSTRY**
MASCHINE ZUR HERSTELLUNG VON IM WESENTLICHEN ZYLINDRISCHEN ARTIKELN DER TABAKVERARBEITENDEN INDUSTRIE
MACHINE POUR LA PRODUCTION D'ARTICLES SENSIBLEMENT CYLINDRIQUES DANS L'INDUSTRIE DU TABAC

(30) Priority: 17.10.2014 IT BO20140568
(43) Date of publication of application: 23.08.2017
(73) Proprietor: G.D Societa' per Azioni, 40133 Bologna (IT)
(72) Inventor: MENGOLI, Fausto, 40037 Sasso Marconi (IT); SARTONI, Massimo, 40139 Bologna (IT)
(74) Representative: Mangini, Simone
(86) International application number: PCT/IB2015/057973
(87) International publication number: WO 2016/059613

(56) References cited:
- WO-A1-2005/080238
- DE-A1-102008 056 296
- GB-A- 2 089 189
- US-A- 3 314 734

## Description

### TECHNICAL FIELD

The present invention relates to a conveying device for conveying particles in the tobacco processing industry and to a machine for producing substantially cylindrical articles in the tobacco processing industry.

### BACKGROUND ART

In the field of the tobacco processing industry it is known to feed the tobacco, by suction, to a forming device, which is designed to produce a cigarette rod. The intake air contains tobacco particles sufficiently small to pass through the suction holes, but also sufficiently large (e.g. with fibers that do not pass through a 50 mesh sieve - opening size 0.34 mm) to make the recycle and reuse thereof interesting.

Therefore, conveying devices are normally used being designed to convey the particles to one or more cyclone separators designed to separate the larger sized particles (and therefore reusable) from smaller particles.

The solutions used so far do not allow, however, a precise selection of the particles and are relatively not so adaptable to process changes, e.g. linked to different types of tobacco used and/or product to be produced.

### DISCLOSURE OF INVENTION

The object of the present invention is to provide a device and a machine, which allow to overcome, at least partially, the drawbacks of the prior art and are, at the same time, easy and inexpensive to implement.

According to the present invention a device and a machine are provided, as claimed in the independent claims below and, preferably, in any one of the claims depending directly or indirectly on the aforementioned independent claims.

### BRIEF DESCRIPTION OF THE DRAWINGS

The present invention will now be described with reference to the accompanying drawings, which illustrate a non-limiting embodiment, wherein:
- Figure 1 schematically illustrates a part of a machine according to the present invention;
- Figure 2 is a perspective view of a device according to the present invention;
- Figures 3 and 4 are perspective views in enlarged scale and with some parts omitted for clarity, of a component of the device of Figure 2; and
- Figures from 5 to 8 are lateral views, and partially sectioned, of the component of Figures 3 and 4 in different operating conformations with some details omitted for clarity.

### BEST MODE FOR CARRYING OUT THE INVENTION

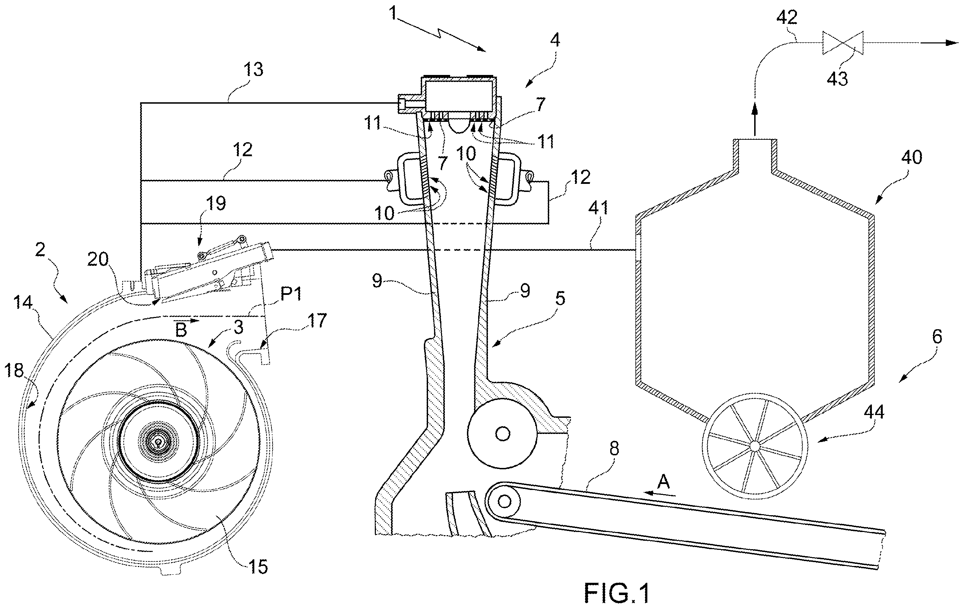

In figure 1, with 1 is indicated as a whole a machine for producing a rod for substantially cylindrical articles in the tobacco processing industry.

In accordance with a first aspect of the present invention, the machine 1 comprises a conveying device 2 for conveying particles in the tobacco processing industry (in particular, tobacco particles) provided with a moving assembly 3 (in particular, a suction unit).

In particular, the device 2 is designed to suck, together with the air, tobacco particles, and select a portion of interest (for example particles with weight in a given range) and recover the same. More precisely, the device 2 is the primary suction element of a hopper of the machine 1.

According to the embodiment shown in Figure 1, the machine 1 comprises a forming device 4, an upward chimney 5 to feed tobacco fibers to the forming device 4, and a conveyor assembly 6 to take the tobacco fibers to the upward chimney 5 in a predetermined direction A. The forming device 4 comprises at least a forming beam (for folding a tape of paper about a tobacco rod so as to obtain a cigarette rod - the forming beam is in itself known and not illustrated) and at least one forming belt 7. The forming belt 7 is designed to convey the tobacco rod to and through the respective forming beam in a direction transverse to the direction A (and substantially perpendicular to the plane of the sheet of Figure 1).

The conveyor assembly 6 comprises a feeding belt 8 to take the tobacco fibers (in particular, a layer of tobacco fiber) at a lower portion of the upward chimney 5, which is provided with lateral walls 9 provided with suction holes 10 to create a depression in the top of the chimney 5 itself and allow, therefore, the upward movement of the tobacco particles.

The forming belt 7 is (as well) provided with suction holes 11 which allow to couple the tobacco particles to the forming belt 7 itself.

According to some embodiments, the holes 10 and 11 are connected to the device 2, which is (therefore) designed to allow the suction through the holes 10 and 11 themselves, by means of respective conduits 12 and 13. It is important to note that small sized tobacco particles can pass (and in practice pass) through the holes 10 and 11 and, thereby arrive at the device 2. Although said particles are relatively small, some of them are of such a size (in particular, when they are not able to pass through a 50 mesh sieve - aperture size 0.34 mm) so as to make the recovery (and reuse) thereof useful.

In this regard, note that, in accordance with a second aspect of the present invention, the conveying device 2 is provided for conveying particles in the tobacco processing industry (in particular, tobacco particles).

The device 2 comprises a wall 14 (outer), which is located (at least partly) about the air-moving assembly 3 with its concavity facing the air-moving assembly 3 itself. In particular, the air-moving assembly 3 has a substantially circular perimeter (facing the wall 14).

According to some embodiments, the wall 14 extends about the air-moving assembly 3 according to a substantially circular shape. More precisely, the wall 14 extends in a spiral about the air-moving assembly 3.

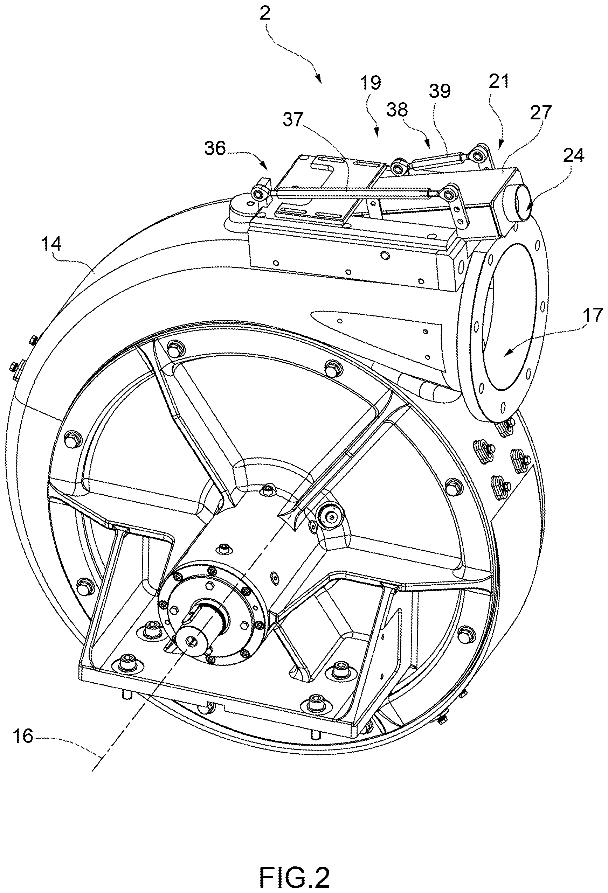

According to the depicted embodiment, the air-moving assembly 3 comprises a fan 15, which is substantially circular and rotatable about its own respective axis 16. In this case, the air (and tobacco particles) enters the device 2 in a direction parallel to the axis 16 through a known type conduit (not illustrated) from a rear position with respect to the side shown in Figure 2. In particular, said conduit is connected to the device 2 in a position facing the shaft of the fan 15 rotating about the axis 16.

In use, the tobacco particles, by entering into the device 2, are deflected (by the blades of the fan 15) towards the wall 14.

Note that, according to some alternatives, the air-moving assembly 3 and the feeding of tobacco to the device 1 may be of the type described in one or more of the following patent publications: EP501910B1, DE1279538, US4900345 and WO2005080238.

The device 2 is designed to convey the air (and the tobacco particles) to an outlet opening 17 along a flow path P1, which has at least one curved portion and is located between the wall 14 (in the area of the concavity of the wall 14) and the air-moving assembly 3. More precisely, the air (and the tobacco particles), in use, is conveyed along the flow path P1 in a direction B.

According to some embodiments, the device 2 comprises a conveying conduit 18, which has at least one curved portion (in the area of the concavity of the wall 14 and of the curved portion of P1) and is partly bounded (more precisely, towards the outside) by the wall 14. In particular, the conduit 18 is bounded on one side by the wall 14 and on the opposite side by the air-moving assembly 3. More precisely, the flow path P1 extends (at least partly) along the conduit 18.

Advantageously, the conduit 18 has an open end located at the outlet opening 17. More precisely, said open end defines the outlet opening 17.

The device 2 also comprises a recovery assembly 19, which is located in the area of the wall 14 and has a recovery port 20 designed to allow (along with air) the passage of tobacco processing industry particles (in particular, tobacco particles) to flow from the inside towards the outside of the device 2.

In other words, in use (when the recovery port 20 is open) part of the air and of the particles that move along the flow path P1, leave the flow path P1 itself and pass through the recovery port 20.

Advantageously, the recovery assembly 19 (and, in particular, the recovery port 20) is located immediately upstream (with respect to the direction B) from the outlet 17. More in particular, there are not curved sections of the conveyor duct 18 between the recovery assembly 19 and the outlet opening 17.

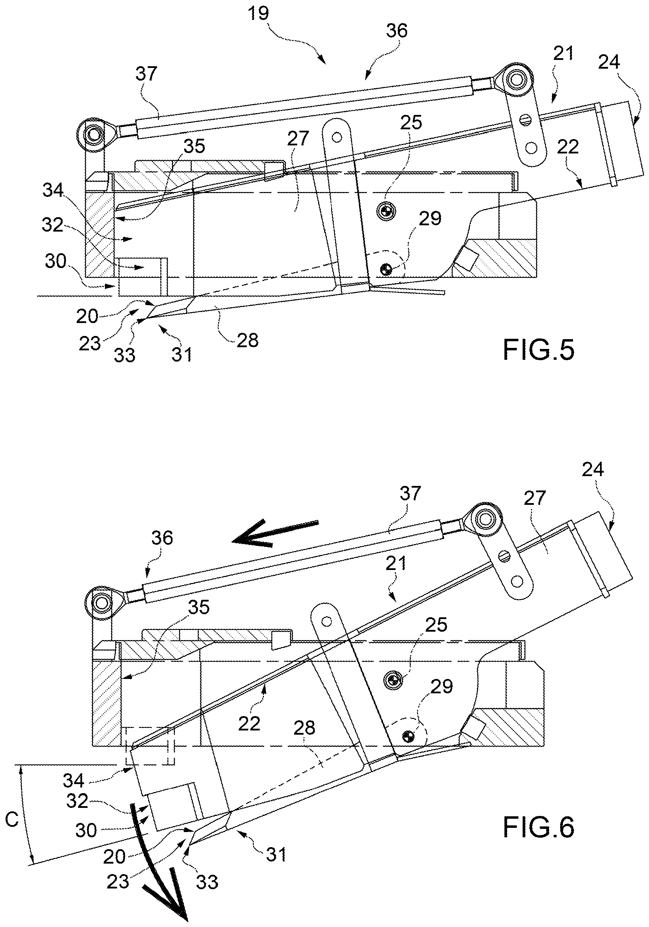

Advantageously, the recovery port 20 is adjustable. In particular (making particular reference to Figures 5 and 6), the position of the recovery port 20 is adjustable (changeable). More precisely, the position of the recovery port 20 is adjustable (changeable) with respect to flow path P1 (in particular, inside the conduit 18). In the embodiment illustrated, Figure 6 describes the change in position of the recovery port 20 with respect to the position of the recovery port 20 itself indicated in Figure 5.

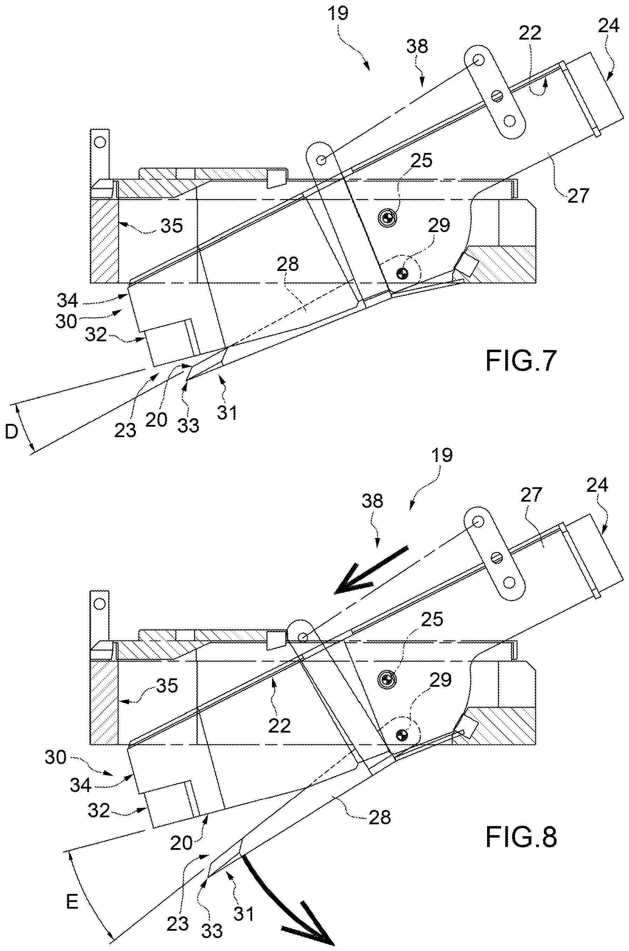

In addition or alternatively, the size of the recovery port 20 is adjustable (changeable). In the depicted embodiment, Figure 8 depicts the change in size of the recovery port 20 with respect to a closed configuration.

Note that by changing the position and/or the size of the recovery port 20 it is possible to select the type (for example, based on the weight) of the tobacco particles which pass through the recovery port 20 itself. In this regard, it is important to emphasize that it has been experimentally observed that the trajectories of the particles along the flow path P1 (i.e. along the conduit 18) are function of the type (in particular, the size) of the tobacco particles. However, the actual trajectories of the particles may also depend on additional factors such as the variety of tobacco (e.g. the origin, the treatments received etc.) and operating parameters (e.g. the temperature, the humidity, the speed of the air-moving assembly 3 etc.). In this context, it is extremely advantageous to be able to vary the position and/or the opening of the recovery port 20 when altered operational factors are needed such as, for example, in changing the brand of cigarettes to be produced (possibly also changing the variety of tobacco) and/or the necessity to adapt to specific climatic conditions.

Advantageously, the recovery port 20 is rotatable about an axis 25. In other words, the position of the recovery port 20 is adjusted by rotating the recovery port 20 (with respect to the wall 14) about the axis 25. Figure 6 exemplifies a rotation of the recovery port 20 by an angle C.

In this manner, the position of the recovery port is particularly simple.

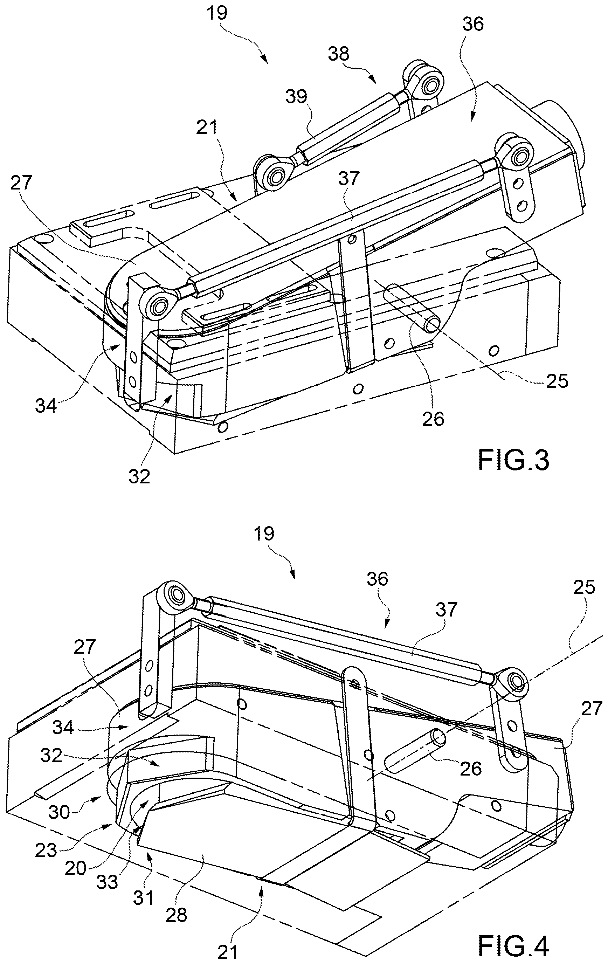

According to some embodiments (particular reference is made to Figures 3 to 8), the recovery assembly comprises a hollow body 21, which has a through-lumen 22 provided with an open end 23 facing towards the inside of the device (in particular, towards the air-moving assembly 3) and an open end 24 (opposite to the end 23) and facing towards the outside (more specifically, located outside) of the device 2. In particular, the open end 23 defines the recovery port 20.

In particular, the hollow body 21 is mounted rotatable at (on) the wall 14. Advantageously, the hollow body 21 is rotatable (with respect to the wall 14) about the axis 25. More precisely, the axis 25 is located at the wall 14. According to some embodiments, the hollow body 21 is mounted on the wall 14 by means of two pins 26 (only one of which illustrated in Figures 3 and 4).

Advantageously, the hollow body 21 comprises a member 27 rotatable about the axis 25 and a member 28 rotatable about an axis 29. More precisely, the member 28 is rotatable about an axis 29 with respect to the member 27. In particular, the member 28 is mounted rotatable on the member 27 by means of respective pins.

Figures 7 and 8 exemplify a rotation of the member 28 by an angle D and, respectively, by an angle E (with respect to a closing conformation of the recovery port 20).

The members 27 and 28 have respective end portions 30 and 31 designed to bound the recovery port 20.

Advantageously, the end portions 30 and 31 each comprise a convex surface 32 and, 33 respectively, facing towards the flow path P1. In particular, the surfaces 32 and 33 have a pointed shape.

The shapes of the surfaces 32 and 33 allow a better sliding of the particles on the surfaces 32 and 33 themselves thus reducing the risk of wear and/or damage.

According to some embodiments (such as that depicted), the end portion 30 has a further surface 34, which is located on the opposite side of the surface 32 with respect to the element 26 is curved with convexity directed towards the flow path P1.

Advantageously, in the wall 14 a seat 35 is formed, which is designed to house (at least partly) the end portion 30 and has a shape complementary to that of the surface 34.

The particular shape of the surface 34 (and of the seat 35) allows to improve the sliding of the particles on the surface and at the same time to allow good movement of the member 27 by reducing the risk of particles entering into the seat 35.

Advantageously, the recovery assembly 19 has an actuator 36 for moving (regulate the rotation) of the recovery port 20 (in particular, the member 27) about the axis 25. According to some embodiments (including that illustrated), the actuator 36 comprises a tie rod 37 (Figures from 3 to 6) which has one end mounted on a bracket integral with the wall 14 and one end mounted on a bracket integral with the hollow body 21 (more precisely, the member 27). Figure 6 illustrates the effect of loosening (lengthening) the tie rod 37.

According to alternative embodiments, the actuator 36 comprises a stepper motor (instead of the tie rod 37).

Advantageously, the recovery assembly 19 comprises an actuator 38 to adjust (change) the size of the recovery port 20. In particular, the actuator 38 is designed to move (regulate the rotation) of the member 28 about the axis 29.

According to some embodiments (including the depicted one), the actuator 38 comprises a tie rod 39 (Figure 3), which has one end mounted on a bracket integral with the member 28 and one end mounted on a bracket integral with the member 27. Figure 8 illustrates the effect of loosening (lengthening) the tie rod 39.

According to alternative embodiments, the actuator 38 comprises a stepper motor (instead of the tie rod 39).

According to some embodiments, the machine 1 also comprises a cyclone separator 40, which is designed to receive tobacco particles from the device 1 and remove the lighter particles.

In particular, the cyclonic separator 40 is connected to the recovery assembly 19 (more precisely, to the open end 24) by means of a conduit 41. In use, the tobacco particles leave the cyclone separator 40 through a head conduit 42 provided with a valve 43. The particles of greater weight (and therefore the most interesting with regard to the reuse thereof) come out from the bottom 44 of the cyclone separator 40.

The particles recovered are intended to be located in an intermediate area (more precisely, at a height) of the tobacco rod so as to be contained and retained by the tobacco fibers (typically larger) coming from the main supply.

In this manner, the recovered particles, once sucked through the chimney 5, will not be in direct contact with the forming belt 7 (thus reducing the risk of further passage through the holes 11) and in the finished cigarette, will be in an inner and not peripheral area of the cigarette (decreasing in this way the risk that these particles - being relatively small - may spill out from the tips of the cigarettes themselves).

## Claims

1. A conveying device for conveying particles, in particular tobacco particles, in the tobacco processing industry; the conveying device (2) comprises an air-moving assembly (3), and a wall (14) at least partly surrounding the air-moving assembly (3), with its concavity facing the air-moving assembly (3), and is designed to convey the air to an outlet opening (17) along a flow path (P1) having at least one curved portion and located between the wall (14) and the air-moving assembly (3); the conveying device (2) being **characterized by** comprising a recovery assembly (19) located in the area of the wall (14) and having an adjustable recovery port (20) designed to allow particles in the tobacco processing industry to flow out of the conveying device (2).

2. A device as claimed in Claim 1, wherein the position of the recovery port (20) is adjustable.

3. A device as claimed in Claim 1 or 2, wherein the size of the recovery port (20) is adjustable.

4. A device as claimed in one of the foregoing Claims, wherein the recovery assembly (19) is located in the area of the outlet opening (17).

5. A device as claimed in one of the foregoing Claims, and comprising a conduit (18) which has at least one curved portion, is bounded at least partly by said wall (14), and has an open end located at the outlet opening (17) and designed to allow the air to flow out of the conveying device (2); the flow path (P1) extending at least partly along the conduit (18); and the position of the recovery port (20) being adjustable inside the conduit (18).

6. A device as claimed in one of the foregoing Claims, wherein the recovery assembly (19) comprises a hollow body (21) which has a through lumen (22) having a first open end (23) facing inwards of the conveying device (2), and a second open end (24) facing outwards of the conveying device (2); the first open end (23) defining said recovery port (20); and the hollow body (21) being mounted to rotate about a first axis (25) located at said wall (14).

7. A device as claimed in Claim 6, wherein the hollow body (21) comprises a first member (27) mounted to rotate about the first axis (25); and a second member (28) mounted to rotate with respect to the first member (27) about a second axis (29); the first and second member (27, 28) having respective end portions (30, 31) bounding said recovery port (20) .

8. A device as claimed in Claim 6 or 7, and comprising a first actuator (36) for adjusting rotation of the hollow body (21) about the first axis (25); and a second actuator (38) for adjusting rotation of the second member (28) about the second axis (29).

9. A device as claimed in Claim 7 or 8, wherein the end portions (30, 31) of the first and second member (27, 28) have respective convex surfaces facing said flow path (P1).

10. A machine for producing substantially cylindrical articles in the tobacco processing industry, and comprising a conveying device (2) as claimed in one of the foregoing Claims.

## Patentansprüche

1. Beförderungsvorrichtung zum Befördern von Partikeln, insbesondere von Tabakpartikeln, in der Tabakverarbeitungsindustrie; wobei die Beförderungsvorrichtung (2) eine Luftbewegungsanordnung (3) und eine Wand (14), die die Luftbewegungsanordnung (3) wenigstens teilweise umgibt, umfasst, wobei ihre Konkavität der Luftbewegungsanordnung (3) zugewandt ist und wobei sie so gestaltet ist, dass sie Luft zu einer Auslassöffnung (17) längs eines Strömungswegs (P1), der wenigstens einen gekrümmten Abschnitt besitzt und sich zwischen der Wand (14) und der Luftbewegungsanordnung (3) befindet, befördert; wobei die Beförderungsvorrichtung (2) **gekennzeichnet ist durch** eine Rückgewinnungsanordnung (19), die sich in dem Bereich der Wand (14) befindet und einen einstellbaren Rückgewinnungsanschluss (20) besitzt, der gestaltet ist, um es Partikeln in der Tabakverarbeitungsindustrie zu ermöglichen, aus der Beförderungsvorrichtung (2) auszuströmen.

2. Vorrichtung nach Anspruch 1, wobei die Position des Rückgewinnungsanschlusses (20) einstellbar ist.

3. Vorrichtung nach Anspruch 1 oder 2, wobei die Größe des Rückgewinnungsanschlusses (20) einstellbar ist.

4. Vorrichtung nach einem der vorhergehenden Ansprüche, wobei sich die Rückgewinnungseinrichtung (19) im Bereich der Auslassöffnung (17) befindet.

5. Vorrichtung nach einem der vorhergehenden Ansprüche, die eine Leitung (18) aufweist, die wenigstens einen gekrümmten Abschnitt besitzt, durch die Wand (14) wenigstens teilweise begrenzt ist und ein offenes Ende besitzt, das sich bei der Auslassöffnung (17) befindet und gestaltet ist, um es der Luft zu ermöglichen, aus der Beförderungsvorrichtung (2) auszuströmen; wobei sich der Strömungsweg (P1) wenigstens teilweise entlang der Leitung (18) erstreckt; und die Position des Rückgewinnungsanschlusses (20) in der Leitung (18) einstellbar ist.

6. Vorrichtung nach einem der vorhergehenden Ansprüche, wobei die Rückgewinnungsanordnung (19) einen hohlen Körper (21) aufweist, der einen durchgehenden Hohlraum (22) besitzt, wovon ein erstes offenes Ende (23) in die Beförderungsvorrichtung (2) weist und ein zweites offenes Ende (24) aus der Beförderungsvorrichtung (2) weist; wobei das erste offene Ende (23) den Rückgewinnungsanschluss (20) definiert; und wobei der hohle Körper (21) so montiert ist, dass er sich um eine erste Achse (25), die sich bei der Wand (14) befindet, dreht.

7. Vorrichtung nach Anspruch 6, wobei der hohle Körper (21) ein erstes Element (27) aufweist, das so montiert ist, dass es sich um die erste Achse (25) dreht; und ein zweites Element (28) aufweist, das so montiert ist, dass es sich in Bezug auf das erste Element (27) um eine zweite Achse (29) dreht; wobei das erste und das zweite Element (27, 28) jeweilige Endabschnitte (30, 31) besitzen, die den Rückgewinnungsanschluss (20) begrenzen.

8. Vorrichtung nach Anspruch 6 oder 7, die einen ersten Aktor (36) aufweist, um eine Drehung des hohlen Körpers (21) um die erste Achse (25) einzustellen; und einen zweiten Aktor (38) aufweist, um eine Drehung des zweiten Elements (28) um die zweite Achse (29) einzustellen.

9. Vorrichtung nach Anspruch 7 oder 8, wobei die Endabschnitte (30, 31) des ersten und des zweiten Elements (27, 28) jeweilige konvexe Oberflächen besitzen, die dem Strömungsweg (P1) zugewandt sind.

10. Maschine zum Herstellen im Wesentlichen zylindrischer Artikel in der Tabakverarbeitungsindustrie, die eine Beförderungsvorrichtung (2) nach einem der vorhergehenden Ansprüche enthält.

## Revendications

1. Dispositif transporteur pour transporter des particules, en particulier des particules de tabac, dans l'industrie de la transformation du tabac ; le dispositif transporteur (2) comprend un ensemble de déplacement par air (3), et une paroi (14) entourant, au moins en partie, l'ensemble de déplacement par air (3), avec sa concavité tournée vers l'ensemble de déplacement par air (3), et est conçu pour transporter l'air jusqu'à une ouverture de sortie (17) le long d'un passage d'écoulement (P1) comportant au moins une partie courbe et situé entre la paroi (14) et l'ensemble de déplacement par air (3) ; le dispositif transporteur (2) étant **caractérisé en ce qu'**il comprend un ensemble de récupération (19) situé dans la zone de la paroi (14) et comportant un orifice de récupération réglable (20) conçu pour permettre aux particules dans l'industrie de la transformation du tabac de s'écouler hors du dispositif transporteur (2).

2. Dispositif selon la revendication 1, dans lequel la position de l'orifice de récupération (20) est réglable.

3. Dispositif selon la revendication 1 ou 2, dans lequel la dimension de l'orifice de récupération (20) est réglable.

4. Dispositif selon l'une des revendications précédentes, dans lequel l'ensemble de récupération (19) est situé dans la zone de l'ouverture de sortie (17).

5. Dispositif selon l'une des revendications précédentes, et comprenant un conduit (18) qui comporte au moins une partie courbe, est délimité, au moins en partie, par ladite paroi (14), et comporte une extrémité ouverte située à l'ouverture de sortie (17) et conçue pour permettre à l'air de s'écouler hors du dispositif transporteur (2) ; le passage d'écoulement (P1) s'étendant, au moins en partie, le long du conduit (18) ; et la position de l'orifice de récupération (20) étant réglable à l'intérieur du conduit (18).

6. Dispositif selon l'une des revendications précédentes, dans lequel l'ensemble de récupération (19) comprend un corps creux (21) qui comporte une lumière traversante (22) comportant une première extrémité ouverte (23) tournée vers l'intérieur du dispositif transporteur (2), et une seconde extrémité ouverte (24) tournée vers l'extérieur du dispositif transporteur (2) ; la première extrémité ouverte (23) définissant ledit orifice de récupération (20) ; et le corps creux (21) étant monté pour tourner autour d'un premier axe (25) situé à ladite paroi (14) .

7. Dispositif selon la revendication 6, dans lequel le corps creux (21) comprend un premier organe (27) monté pour tourner autour du premier axe (25) ; et un second organe (28) monté pour tourner par rapport au premier organe (27) autour d'un second axe (29) ; les premier et second organes (27, 28) comportant des parties d'extrémité respectives (30, 31) délimitant ledit orifice de récupération (20).

8. Dispositif selon la revendication 6 ou 7, et comprenant un premier actionneur (36) pour ajuster la rotation du corps creux (21) autour du premier axe (25) ; et un second actionneur (38) pour ajuster la rotation du second organe (28) autour du second axe (29).

9. Dispositif selon la revendication 7 ou 8, dans lequel les parties d'extrémité (30, 31) des premier et second organes (27, 28) comportent des surfaces convexes respectives tournées vers ledit passage d'écoulement (P1).

10. Machine pour produire des articles sensiblement cylindriques dans l'industrie de la transformation du tabac, et comprenant un dispositif transporteur (2) selon l'une des revendications précédentes.
